# EUROPÄISCHE PATENTSCHRIFT

(11) **EP 2 226 205 B1**
(45) Veröffentlichungstag und Bekanntmachung des Hinweises auf die Patenterteilung: **16.05.2012**
(21) Anmeldenummer: 10075091.8
(22) Anmeldetag: 01.03.2010
(51) Int. Cl.: B60C 23/00, B60C 23/04

(54) **Verfahren zur Reifendruckregelung und Reifendruckregelanlage**
Method for the regulation of tyre pressure and tyre pressure regulating system
Procédé pour le réglage de pression de pneux et système de réglage de la pression de pneux

(30) Priorität: 02.03.2009 DE 102009011236
(43) Veröffentlichungstag der Anmeldung: 08.09.2010
(73) Patentinhaber: Müller, Klaus, 50733 Köln (DE)
(72) Erfinder: Müller, Klaus, 50733 Köln (DE)
(74) Vertreter: Patentanwälte Freischem

(56) Entgegenhaltungen:
- DE-A1- 19 804 249
- DE-A1-102006 021 712
- DE-A1-102007 053 260
- US-A1- 2008 066 533

## Beschreibung

Reifendruckregelanlagen können bei vielen Fahrzeugen von Nutzen sein, bei land- oder forstwirtschaftlichen Fahrzeugen sind sie besonders erwünscht. Ein Absenken des Reifendrucks schont den Boden und kann die Traktion verbessern. Versuche mit Ackerschleppern haben gezeigt, dass man beim Befahren lockerer und nachgiebiger Böden durch einen verminderten Reifendruck sogar Vorteile beim Kraftstoffverbrauch erzielen kann. Es ist wünschenswert, den Reifendruck vom Fahrzeug aus, auch während der Fahrt, anpassen zu können.

Reifendruckregelanlagen mit zentraler Druckquelle, mit Versorgungsleitungen zu den Reifen und mit Rotorverbindungen in deren Verlauf sind zahlreich bekannt, darunter auch solche, die an den Rädern pneumatisch steuerbare Ventile, sog. Radventile, aufweisen, bei denen die Übertragungswege im Ruhezustand druckentlastet sein können und die in Einleitungstechnik ausgeführt sind. Einleitungstechnik bedeutet in diesem Zusammenhang, dass zwischen den rotierenden Teilen und dem stationären Teil einer solchen Anlage neben den Versorgungsleitungen keine weiteren Druckleitungen, etwa zur Steuerung der Radventile, existieren.

Es gibt Reifendruckregelanlagen, bei denen ihre Funktion (Füllen, Sperren oder Ablassen) unmittelbar vom in der Versorgungsleitung anliegendem Druckniveau abhängt. Eine aus JP 2000255228 A bekannte Vorrichtung füllt bei in der Versorgungsleitung anliegendem Überdruck und sperrt bei Atmosphärendruck. An die Versorgungsleitung angelegter Unterdruck führt zum Ablassen. Eine aus DE 32 47 371 A1 bekannte Regelanlage füllt ebenso bei hohem Druck in der Versorgungsleitung und sperrt ebenfalls bei Atmosphärendruck. Ein vergleichsweise niedriger Überdruck in der Versorgungsleitung führt hier zum Ablassen. Dieser niedrige Druck ist bei dieser Anlage dann auch untere Schranke für die Reifenfülldrücke. Die beiden genannten Anlagen haben den Vorteil, abreißsicher zu sein, d.h., bei Abriss oder Bruch der Versorgungsleitung sperren diese Anlagen augenblicklich, falls sie sich nicht ohnehin im Ruhezustand und damit in Sperrstellung befinden. Nachteilig bei der Anlage aus JP 2000255228 A ist natürlich, dass man zusätzlich eine Unterdruckquelle benötigt. Ein Nachteil bei der Anlage aus DE 32 47 371 A1 dürfte sein, dass die dort vorgesehenen Radventile, die bereits bei ziemlich niedrigen Drücken in Durchlassstellung wechseln sollen, wohl kaum besonders kompakt gestaltet werden können.

Aus DE 198 04 249 A1 und aus US 2008/0066533 A1 sind weitere Vorrichtungen zur Einstellung des Reifendrucks an einem Fahrzeug bekannt, bei welchen zwischen drei Druckniveaus unterschieden wird. In DE 198 04 249 A1 wird zwischen einem drucklosen Zustand (Atmosphärendruck), einem hohen und einem mittleren Druckniveau unterschieden. In der US 2008/0066533 A1 wird zwischen einem Überdruck, dem Atmosphärendruck und einem Unterdruck unterschieden. Als Funktion des anliegenden Druckniveaus wird ein Reifen befüllt, entleert oder auf konstantem Druckniveau gehalten.

In DE 10 2006 021 712 A1 sind einfache Reifenfüllvomchtungen (Regetvorrichtungen) In Einleitungstechnik beschrieben, bei denen im Gegensatz zu den davor genannten nur zwischen zwei signifikanten Druckniveaus unterschieden und gewechselt wird. Signifikant hohe Drücke wechseln sich hier mit signifikant niedrigen Drücken in der Versorgungsleitung ab, oder anders ausgedrückt: auf ein Hochdruckintervall folgt ein Niedrigdruckintervall und umgekehrt. Vortellhafterweise wird bei diesen Reifenfülllvorrichtungen einfach nur dazwischen unterschieden, ob an eine Versorgungsleitung Überdruck angelegt ist oder ob sie gerade druckentlastet ist. Wesentliches Merkmal dieser Vorrichtungen ist ein Radventil, das zwischen einer Sperrstellung und einer Durchlassstellung bewegbar und als druckgesteuertes Flip-Flop ausgebildet ist, also eine Impulsuntersetzung aufweist. Als nachteilig bei diesen Reifenfüllvorrichtungen kann man die ungewöhnlichen Bedienprozeduren ansehen, die mit den Relfendruckänderungsvorgängen einhergehen und ein zweimaliges -Druck anlegen" und zweimaliges "Druck wegnehmen" umfassen. Ein wesentlicher Nachteil dieser Reifenfüfivorrichtungen besteht jedoch darin, dass sie nicht abreißsicher sind. Es kann vorkommen, dass eine Reifendruckregelanlage lange Zeit nicht genutzt wird, eine beschädigte Versorgungsleltung somit über längere Zeit unentdeckt bleibt und bei einer plötzlichen Druckbeanspruchung platzt. Der Abriss oder eine sonstige Zerstörung der Versorgungsleitung bleibt im Ruhezustand zwar auch bei den Füllvorrichtungen aus DE 10 2006 021 712 A1 ohne Folgen für den angeschlossenen Reifen, während eines Reifendruckänderungsvorgangs hingegen kann ein Abriss oder das Platzen der Versorgungsleitung zu einem unerwünschten Druckverlust im Reifen führen.

Auch aus DE 10 2007 053 260 A1 sind Reifendruckregelanlagen in Einleitungstechnik, bei denen in der Versorgungsleitung lediglich zwischen den zwei Zuständen "Druck vorhanden" und "drucklos" gewechselt wird, bekannt. Die darin beschriebenen Vorrichtungen gestatten eine individuelle Regelung der Fülldrücke separater Reifen über eine gemeinsame Versorgungsleitung. Um eine Reifendruckänderung vorzunehmen und abzuschließen, muss bei einer solchen Vorrichtung die Versorgungsleitung prinzipbedingt mindestens zweimal druckbeaufschlagt werden. Damit ergibt sich aber auch hier der Nachteil, dass die Vorrichtungen und das entsprechende Verfahren zur Reifendruckregelung nicht jederzeit abreißsicher sind.

Ausgehend von diesem Stand der Technik liegt der Erfindung die Aufgabe zugrunde, ein einfaches und abreißsicheres Verfahren zur Regelung des Reifendrucks bereitzustellen. Einer erfindungsgemäßen Reifendruckregelanlage liegt die Aufgabe zugrunde, möglichst einfach, abreißsicher und vorteilhaft aufgebaut zu sein. Darüber hinaus soll die Erfindung es ermöglichen, Zwillingsreifen über eine gemeinsame Versorgungsleitung individuell zu regeln.

Die an das Verfahren gestellte Aufgabe wird nach Anspruch 1 dadurch gelöst, indem es die folgenden Merkmale aufweist:
1) ein Reifendruckänderungsvorgang kann nur dann erfolgen, wenn in der entsprechenden Versorgungsleitung ein Hochdruck herrscht und eine Wartezeit, die mit Beginn eines jeden Hochdruckintervalls von neuem anfängt, abgelaufen ist, wobei die Wartezeit auch null betragen und somit also entfallen kann,
2) eine Reifendruckänderung erfolgt während eines in der Versorgungsleitung auftretenden Hochdruckintervalls nur in eine Richtung (Druckabsenkung oder Druckerhöhung) und im Falle einer individuellen Regelung von Zwillingsreifen über eine gemeinsame Versorgungsleitung nur an einem der beiden Reifen
3) bei Reifen, denen eine eigene Versorgungsleitung zugeordnet ist, ändert sich dabei von Hochdruckintervall zu Hochdruckintervall die Richtung, in die eine Reifendruckänderung erfolgt oder nach Ablauf der Wartezeit erfolgen würde; ist das Hochdruckintervall kürzer als die Wartezeit, so findet also eine virtuelle Richtungsänderung statt,
4) bei Zwillingsreifen, die über eine gemeinsame Versorgungsleitung individuell geregelt werden, ändert sich von Hochdruckintervall zu Hochdruckintervall die Richtung, in die eine Reifendruckänderung erfolgt oder nach Ablauf der Wartezeit erfolgen würde, und/oder es wechselt der Reifen, bei dem die Druckänderung erfolgt oder nach Ablauf der Wartezeit erfolgen würde, so dass vier beliebige, jedoch direkt aufeinander folgende Hochdruckintervalle an jedem der beiden Reifen eine Druckänderung in jede der beiden Richtungen bewirken oder nach Ablauf der Wartezeit bewirken würden, wobei die Reihenfolge der vier verschiedenen Möglichkeiten, bei Zwillingsreifen einen einzelnen Reifendruck zu ändern, konstruktiv festgelegt ist.

Eine erfindungsgemäße Reifendruckregelanlage zur Durchführung des beschriebenen Verfahrens wird im Wesentlichen durch ihre Radventile charakterisiert. Die Radventile sind komplex, sie werden im folgenden auch als Radventilbaugruppen bezeichnet. Jede Radventilbaugruppe umfasst eine Kombination pneumatisch steuerbarer Ventile mit unterschiedlichen Eigenschaften. Im einfachsten Fall und als erstes Charakteristikum weist eine solche Radventilbaugruppe ein Absperrventil auf, das sicherstellt, dass Reifendruckänderungen, egal in welche Richtung, grundsätzlich nur dann möglich sind, wenn die Versorgungsleitung unter Druck steht, wobei selbst dann eine Reifendruckänderung nicht zwingend erfolgen muss. Alternativ kann diese Aufgabe auch von zwei Absperrventilen übernommen werden, ein Absperrventil ist dann speziell für Ablassvorgänge vorgesehen, das andere für Füllvorgänge. Durch das Absperrventil bzw. durch die Absperrventile wird insbesondere der Vorteil erreicht, dass ein Reifendruckänderungsvorgang, sollte ein solcher gerade erfolgen, mit Abriss oder Bruch der Versorgungsleitung augenblicklich gestoppt wird. Als zweites Charakteristikum weist eine solche Radventilbaugruppe ein richtunggebendes Ventil auf, von dessen Stellung abhängt, ob eine erfolgende Reifendruckänderung als Füllvorgang oder aber als Ablassvorgang stattfindet. Das richtunggebende Ventil ist pneumatisch steuerbar und mit Impulsuntersetzung ausgestattet, es ist also als pneumatisches Flip-Flop ausgebildet. Sein Steueranschluss steht im Normalfall (bei Einfachreifen) mit der Versorgungsleitung in direkter Wirkverbindung. In dem Fall, dass Zwillingsreifen über eine gemeinsame Versorgungsleitung individuell geregelt werden, weisen die Radventilbaugruppen ein drittes Charakteristikum auf, indem sie über ein weiteres, als pneumatisches Flip-Flop ausgebildetes Ventil verfügen. Dieses zusätzliche Flip-Flop-Ventil (drittes Charakteristikum) kann dem richtunggebenden Ventil (zweites Charakteristikum) vorgeschaltet sein. Der Steueranschluss des richtunggebenden Ventils würde dann nicht direkt mit der Versorgungsleitung in Wirkverbindung stehen, sondern nur auf potentielle Weise, da das zusätzliche Flip-Flop-Ventil (drittes Charakteristikum) dann dazwischen liegen würde. Eine Radventilbaugruppe kann darüber hinaus noch weitere Bauteile oder Baugruppen aufweisen, z.B. eine oder mehrere Drosselstellen oder ein Verzögerungsglied.

Das erfindungsgemäße Verfahren zur Regelung des Reifendrucks und eine erfindungsgemäße Reifendruckregelanlage haben damit auch den Vorteil, dass durch den stationären Teil der Anlage nur zwei signifikante Druckzustände bereitgestellt werden müssen, was auf einfachste Weise geschehen kann. Besonders einfach ist es, wenn für den niedrigen Druck der natürliche Umgebungsdruck gewählt wird. Es ist aber auch denkbar, einen kleinen positiven Überdruck, einen Restdruck sozusagen, in den Versorgungsleitungen zu belassen, der von den Radventilbaugruppen ebenfalls als niedriger Druck interpretiert werden kann. Ebenso ist es denkbar, eine Unterdruckquelle mit der Versorgungsleitung in Verbindung zu bringen und den Unterdruck als niedrigen Druck aufzufassen. Auch der hohe Druck, das zweite signifikante Druckniveau für die Reifendruckregelanlage, muss nicht genau festgelegt werden. Der hohe Druck darf sich in einem weiten Bereich bewegen. Wichtig für die Funktion der Reifendruckregelanlage ist allerdings, dass die hohen Drücke sich von den niedrigen Drücken signifikant unterscheiden. Die vorkommenden hohen Drücke und die niedrigen Drücke dürfen selbstverständlich auch jeweils vollkommen gleich sein. In der Regel jedoch wird bei Füllvorgängen in der Versorgungsleitung ein gewisser Druckabfall feststellbar sein. Dies ist nicht weiter schlimm, solange es sich um einen mäßigen Druckabfall handelt und das Druckniveau in der Versorgungsleitung im Bereich signifikant hoher Drücke bleibt. Pneumatisch steuerbare Ventile, die in Analogie zur Digitaltechnik nur zwei Druckpegel (niedrig und hoch) verarbeiten müssen, können einen kompakten Aufbau und hohe Zuverlässigkeit aufweisen.

Die Erfindung wird im folgenden anhand mehrerer Ausführungsbeispiele und Zeichnungen näher erläutert. Zeichnerisch dargestellt sind Reifendruckregelanlagen, Komponenten davon und zur Verdeutlichung Druckverläufe in der Versorgungsleitung mit daraus resultierenden Funktionen. Die Reifendruckregelanlagen sind immer nur mit einem Reifen dargestellt. Eine Reifendruckregelanlage kann jedoch für beliebig viele Räder bzw. Reifen oder auch für Reifenpaare konzipiert sein. Die zentrale Druckquelle braucht dann nur einmal vorhanden zu sein. Gleiche Teile sind mit gleichen Bezugszeichen versehen. Es zeigen:
Fig.1 bis 3 schematische Darstellungen von Reifendruckregelanlagen in verschiedenen Ausführungsformen,
Fig.4 bis 6 schematische Darstellungen von Radventilbaugruppen in weiteren Ausführungsformen,
Fig.7 die schematische Darstellung eines rotierenden Teils einer Reifendruckregelanlage bei Zwillingsbereifung,
Fig.8 einen Druckverlauf in der Versorgungsleitung mit bei Anwendung auf Fig.7 resultierenden Funktionen,
Fig.9 die schematische Darstellung eines rotierenden Teils einer Reifendruckregelanlage bei Zwillingsbereifung in einer weiteren Ausführungsform und
Fig.10 einen Druckverlauf in der Versorgungsleitung mit bei Anwendung auf Fig.9 resultierenden Funktionen.

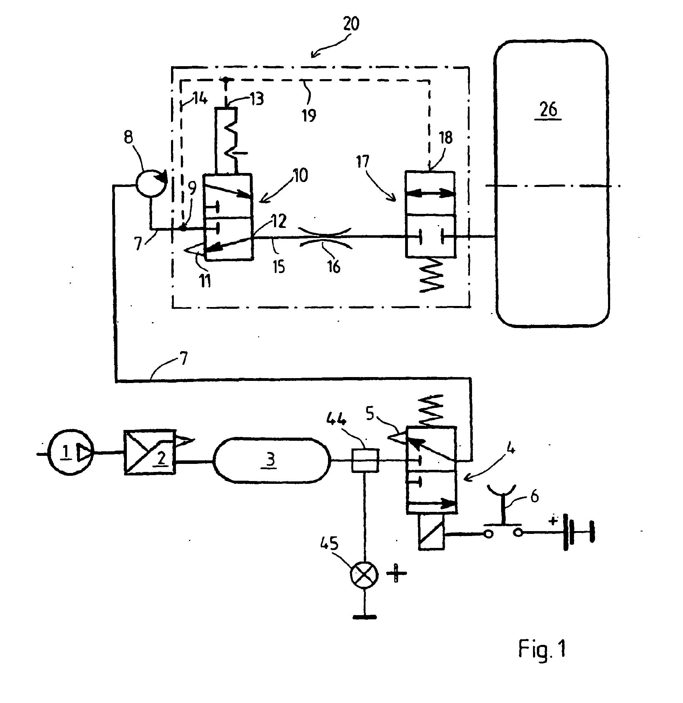

Die Reifendruckregelanlage in Fig.1 ist mit entlüfteter Versorgungsleitung 7 und damit in Ruhestellung dargestellt. Die Anlage weist einen Verdichter 1 auf, der über einen Druckregler 2 einen Vorratsbehälter 3 z.B. mit Druckluft, denkbar wäre jedoch auch ein anderes Medium, versorgt. Dieser Teil der Anlage kann als zentrale Druckquelle bezeichnet werden. Vom Vorratsbehälter 3 führt eine Druckleitung über einen Strömungssensor 44 zu einem 3/2-Wege-Magnetventil 4. Der Strömungssensor 44 gibt immer dann, wenn er eine (nennenswerte) Strömung registriert, ein elektrisches Signal ab und ist mit einer Anzeigevorrichtung (Leuchte 45) verbunden. Das 3/2-Wege-Magnetventil 4 fungiert als Steuerventil für den rotierenden Teil der Reifendruckregelanlage und wird seinerseits hier über den Handtaster 6 gesteuert. Das Steuerventil 4 weist einen Entlüftungsanschluss 5 auf. Vom Steuerventil 4 führt die Versorgungsleitung 7 über die Rotorverbindung 8 in die Radventilbaugruppe 20 hinein, bildet dort einen Knotenpunkt 9 und ist schließlich mit einem pneumatisch steuerbaren und mit Impulsuntersetzung ausgestatteten 3/2-Wegeventil (Umschaltventil 10) verbunden. Die Baugruppe 20 kann man als komplexes Radventil auffassen, und wie für ein Radventil üblich, so ist auch die Radventilbaugruppe 20 ausgangsseitig mit einem Reifen 26 verbunden. Das Umschaltventil 10 kann auf treffende Weise mit einer Weiche verglichen werden. Es stellt das richtunggebende Ventil dar (zweites Charakteristikum). Sein Steueranschluss 13 ist über die Steuerleitung 14 mit dem Knotenpunkt 9 verbunden, des Weiteren verfügt es hier über einen direkten Entlüftungsanschluss 11. Der verbleibende Anschluss 12 des Umschaltventils 10 ist mit einem pneumatisch steuerbaren 2/2-Wegeventil (Absperrventil 17, erstes Charakteristikum) verbunden. Diese Verbindung erfolgt durch eine Zwischenleitung 15, die hier eine Drosselstelle 16 aufweist. Das Absperrventil 17 weist eine Durchlass- und eine Sperrstellung auf, die Sperrstellung ist seine Ruhestellung. Sein Steuereingang 18 ist über eine Steuerleitung 19 mit der Steuerleitung 14 für das Umschaltventil 10 verbunden. Vom Absperrventil 17 führt letztlich eine Druckleitung zum Reifen 26. Während das Umschaltventil 10 innerhalb der Baugruppe 20 die Rolle einer Weiche übernimmt, kann das Absperrventil 17, bildlich betrachtet, mit einer Rot-Grün-Ampel verglichen werden.

Zur Erläuterung der Funktionsweise wird angenommen, dass das Umschaltventil 10 auf positive Druckwechsel reagiert und sich zu Beginn in der Stellung befindet, wie in Fig.1 dargestellt, d.h., die Zwischenleitung 15 steht mit dem Entlüftungsanschluss 11 in Wirkverbindung. Mit positiven Druckwechseln sind Wechsel von niedrigen zu hohen Drücken gemeint. Außerdem befinde sich die Reifendruckregelanlage in Ruhestellung, d.h., die Versorgungsleitung 7 und damit auch die Steuerleitungen 14 und 19 sind über das Steuerventil 4 entlüftet, also druckentlastet. Das Absperrventil 17 befindet sich dann in Sperrstellung. Wird der Taster 6 nun betätigt, so wechselt das Steuerventil 4 in seine Arbeitsstellung, und in der Versorgungsleitung 7 sowie in den Steuerleitungen 14 und 19 herrscht von da an ein hohes Druckniveau. Der erfolgte positive Druckwechsel bewirkt, dass das Umschaltventil 10 seine Stellung wechselt, auch das Absperrventil 17 wechselt seine Stellung. Der Reifen 26 wird über die Drosselstelle 16 sogleich befüllt. Der Strömungssensor 44 registriert die Strömung, als Folge davon leuchtet die Anzeigevorrichtung 45 auf. Wird der Taster 6 daraufhin wieder losgelassen, so erlischt die Anzeigeleuchte 45, gleichzeitig findet in der Versorgungsleitung 7 sowie in den Steuerleitungen 14 und 19 ein Druckwechsel in Richtung Druckentlastung statt. Das Umschaltventil 10 ändert seine Stellung dadurch nicht, das Absperrventil 17 geht jedoch über in seine Ruhestellung und sperrt. Die Reifendruckregelanlage befindet sich in einer Ruhestellung. Ein Reifendruckänderungsvorgang hat stattgefunden und ist abgeschlossen.

Wird der Taster 6 nun oder auch erst nach langer Zeit erneut betätigt, so bewirkt der damit verbundene, in der Versorgungsleitung 7 sowie in den Steuerleitungen 14 und 19 auftretende positive Druckwechsel, dass das Umschaltventil 10 in die Stellung zurückkehrt, wie in Fig.1 skizziert. Auch das Absperrventil 17 wechselt seine Stellung, geht also über in Durchlassstellung. Es findet nun über die Drosselstelle 16 und über den Entlüftungsanschluss 11 ein Ablassvorgang statt, und zwar solange, bis der Taster 6 wieder losgelassen wird. Der Ablassvorgang ist für den Strömungssensor 44 nicht erkennbar, die Anzeigeleuchte 45 bleibt aus. Nach dem Loslassen des Tasters 6 befindet sich die gesamte Reifendruckregelanlage wieder in der ursprünglichen Ruhestellung, so wie in Fig.1 dargestellt. Erneut hat ein Reifendruckänderungsvorgang stattgefunden, und zwar in zum vorhergehenden Vorgang entgegen gesetzte Richtung. Die Anzeigeleuchte 45 tritt nur während Füllvorgängen aktiv in Erscheinung. Der Strömungssensor 44 könnte bei praktisch gleichem Ergebnis auch in die Versorgungsleitung 7 eingebunden sein.

Die Drosselstelle 16 stellt sicher, dass sich das vom Steuerventil 4 vorgegebene Druckniveau auch tatsächlich in der Versorgungsleitung 7 und in den Steuerleitungen 14 und 19 einstellt, indem sie verhindert, dass ein vielleicht niedriger Reifendruck bei Füllvorgängen einen nennenswerten Einfluss auf das Druckniveau in den Steuerleitungen 14 und 19 nehmen kann. Auf eine separate Drosselstelle kann verzichtet werden, wenn z.B. die drosselnde Wirkung des Absperrventils 17 ausreichend groß ist. (Praktisch jedes reale Ventil weist auch eine drosselnde Wirkung auf.) Eine ausgeprägte Drosselstelle gestattet darüber hinaus, Reifendruckänderungsvorgänge kontrollierbar durchzuführen. Wie schnell oder wie langsam ein Füll- oder Ablassvorgang stattfindet, hängt bei der Anlage nach Fig.1 im Wesentlichen von dieser Drosselstelle 16 ab.

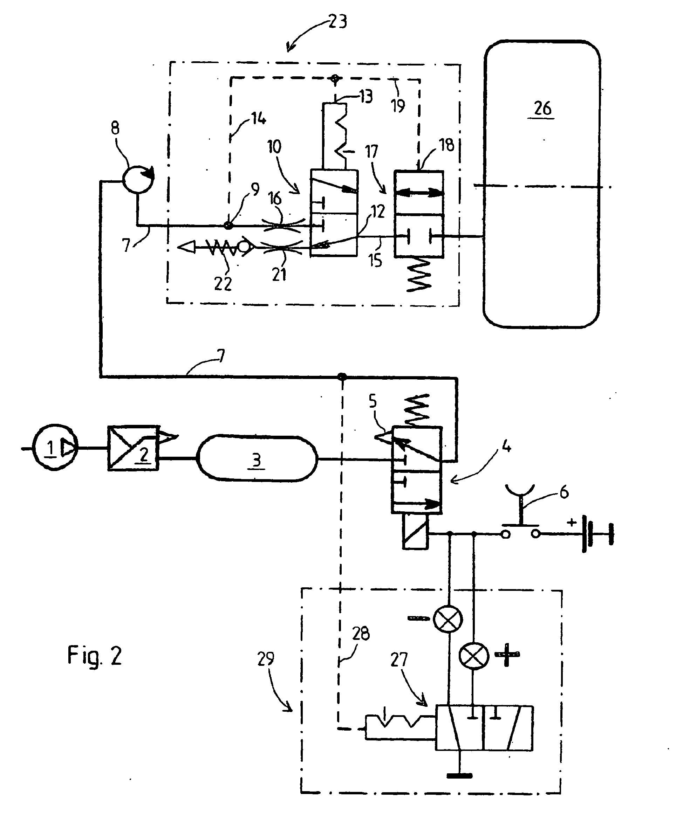

Eine Regelanlage, bei der die Füllgeschwindigkeit unabhängig von der Ablassgeschwindigkeit und damit völlig anders sein kann, ist in Fig.2 dargestellt. Abgesehen von der Anzeigevorrichtung 29, die ohne Strömungssensor auskommt, gibt es Unterschiede zwischen den Regelanlagen nach Fig.2 und Fig.1 nur bei den Radventilbaugruppen. Die Radventilbaugruppe 23 unterscheidet sich von der Baugruppe 20 dadurch, dass sich die Drosselstelle 16 nun zwischen Umschaltventil 10 und Knotenpunkt 9 befindet. Ein weiterer Unterschied besteht darin, dass das Umschaltventil 10 anstatt eines direkten Entlüftungsanschlusses wie in Fig.1 nun eine indirekte Entlüftung über eine Drossel 21 und ein federbelastetes Rückschlagventil 22 aufweist. Wählt man für die Drossel 21 z.B. eine solche mit vergleichsweise geringer Drosselwirkung, so lassen sich schnelle Druckabsenkungen erzielen. Das federbelastete Rückschlagventil 22 soll einen charakteristischen Öffnungsdruck aufweisen. Der charakteristische Öffnungsdruck ist dann Sicherungsdruck für den Reifen 26. Das Funktionsprinzip der Regelanlage nach Fig.2 ist ansonsten identisch mit dem Funktionsprinzip, das der Anlage nach Fig.1 zugrunde liegt.

Die Anzeigevorrichtung 29, die dem Fahrer bei Betätigung des Tasters 6 signalisiert, ob gerade ein Reifenfüllvorgang oder aber ein Reifenablassvorgang stattfindet, weist als wesentliches Bauteil einen Umschaltkontakt 27 auf. Der Umschaltkontakt 27 ist pneumatisch steuerbar, als Flip-Flop ausgebildet und über die Steuerleitung 28 mit der Versorgungsleitung 7 verbunden. Von seiner Schaltstellung hängt ab, welche der beiden Anzeigelampen leuchtet bei geschlossenem Taster 6. Eine solche oder ähnliche Anzeigevorrichtung kann aber auch auf andere Weise, z.B. auf elektronischem Wege, realisiert werden. Es kann vorteilhaft sein, eine Vorrichtung vorzusehen, um den Umschaltkontakt 27 unabhängig vom Signal an seiner Steuerleitung 28 umschalten zu können. Das kann erforderlich sein, falls das richtunggebende Ventil (Umschaltventil 10) und der Umschaltkontakt 27 einmal außer Takt geraten sollten.

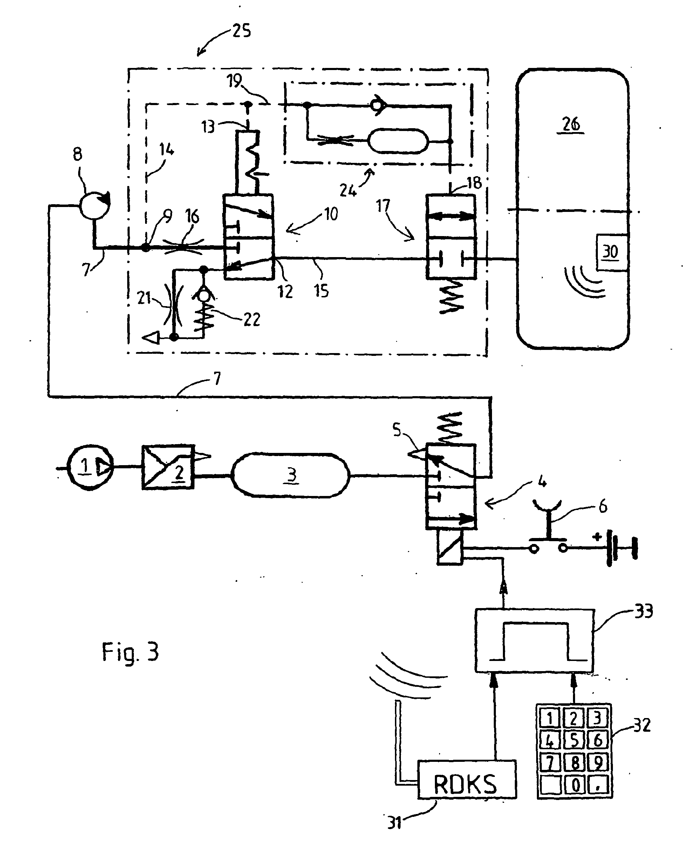

Eine Regelanlage, mit Hilfe eines Reifendruckkontrollsystems (RDKS) einen geschlossenen Regelkreis bildend, ist in Fig.3 dargestellt. Der Reifendruck wird gemessen und mit Hilfe eines Datensenders 30 an einen zentralen Telemetriedatenempfänger 31 übertragen. Die Messdaten werden von dort an ein zentrales Steuergerät 33 weitergeleitet, welches als intelligenter Impulsgenerator arbeitet. Im zentralen Steuergerät 33 erfolgt eine Auswertung, indem die Messdaten mit Zielvorgaben verglichen werden. Die in Grenzen frei wählbaren Zielvorgaben können beispielsweise über ein Handeingabegerät 32 zum zentralen Steuergerät 33 geleitet werden. Es wäre jedoch auch denkbar, dass es sich bei den Zielvorgaben um fest hinterlegte Werte handelt. Als intelligenter Impulsgenerator kann das Steuergerät 33 schließlich kurze oder auch verschieden lange Spannungs- bzw. Stromimpulse erzeugen, damit das Steuerventil 4 dirigieren, somit also Reifendruckänderungsvorgänge selbständig einleiten und abschließen.

Weitere Unterschiede zwischen der Regelanlage nach Fig.3 und den bisher beschriebenen sind noch bei der Radventilbaugruppe zu finden. Die Drosselstelle 16 befindet sich bei der Radventilbaugruppe 25 zwischen dem Umschaltventil 10 und dem Knotenpunkt 9 und ist damit an der gleichen Stelle angeordnet wie bei der Radventilbaugruppe 23. Die gleichen Bauteile, die bei der Radventilbaugruppe 23 die Ablassvorgänge beeinflussen, nämlich die Drossel 21 und das federbelastete Rückschlagventil 22, wirken sich auch bei der Radventilbaugruppe 25 auf die Ablassvorgänge aus, allerdings mit anderem Ergebnis, da sie bei der Radventilbaugruppe 25 parallel angeordnet sind. Ablassvorgänge erfolgen somit bis zum Erreichen des charakteristischen Öffnungsdrucks über das Rückschlagventil 22 sehr schnell, während darüber hinaus gehende Druckabsenkungen über die Drosselstelle 21 nur vergleichsweise langsam erfolgen können. Die Radventilbaugruppe 25 weist außerdem ein Verzögerungsglied 24 auf, das dem Steuereingang 18 des Absperrventils 17 vorgeschaltet ist, jedoch keine Auswirkungen auf das richtunggebende Ventil 10 hat. Das Verzögerungsglied 24 ist so ausgebildet, dass Druckabsenkungen, die in der Versorgungsleitung 7 stattfinden, unverzüglich auch am Steuereingang 18 erfolgen. Wechselt der Druck in der Versorgungsleitung 7 hingegen auf ein hohes Niveau, so wird durch das Verzögerungsglied 24 bewirkt, dass die Druckerhöhung den Steuereingang 18 in einer für das Absperrventil 17 signifikanten Höhe erst nach einer Wartezeit erreicht. Das Verzögerungsglied 24 kann beispielsweise aus einem Rückschlagventil, einer Drossel und einem kleinen Druckspeicher aufgebaut sein, so wie in Fig.3 dargestellt. Der Vorteil, der durch das Verzögerungsglied 24 erreicht wird, besteht z.B. darin, dass bei prinzipiell ähnlicher Funktionsweise, wie zu Fig.1 beschrieben, effektiv zwei oder mehr aufeinanderfolgende Füllvorgänge stattfinden können, indem die an sich dazwischen liegenden Ablassvorgänge unterdrückt werden. Ebenso könnte man effektiv Ablassvorgänge aufeinander folgen lassen, indem die an sich dazwischen liegenden Füllvorgänge unterdrückt werden.

Besonders dann, wenn man wie in Fig.3 auf eine Füll-/Ablassanzeige verzichtet, wäre es hilfreich, jederzeit genau zu wissen, wie das Umschaltventil 10 gerade steht. Deshalb ist es von Vorteil, nicht nur die Reifendrücke zu messen und zu übertragen, sondern auch die Stellung des zugehörigen Umschaltventils 10 zu erfassen und z.B. mit Hilfe des für die Reifendruckkontrolle vorgesehenen Telemetriesystems (z.B. über einen freien Kanal) an das zentrale Steuergerät 33 und/oder an eine spezielle Anzeige zu übertragen. Die Zusammenführung von Radventilbaugruppe und zugehörigem Reifendrucksensor mit Sendemodul zu einer Baueinheit kann von weiterem Vorteil sein.

Die einzelnen Besonderheiten der verschiedenen Radventilbaugruppen können beliebig kombiniert werden. Bei der Beschreibung der Varianten nach Fig.1 bis 3 wurde davon ausgegangen, dass das richtunggebende Ventil 10 immer dann seine Stellung wechselt, wenn an seinem Steuereingang ein definierter Druckwechsel stattfindet, und zwar ein sog. positiver Druckwechsel, also ein Wechsel jeweils von niedrigen zu hohen Drücken. Ein solches Verhalten wird hier als "positiv schaltend" bezeichnet. Die richtunggebenden Ventile können aber prinzipiell auch so konstruiert sein, dass sie "negativ schaltend" sind. Für einen Stellungswechsel würde es dann immer nur auf die Übergänge von hohen zu niedrigen Drücken ankommen, auch dann würden die bisher behandelten Reifendruckregelanlagen prinzipiell funktionieren.

Reifendruckregelanlagen mit Radventilbaugruppen nach dem den Fig.1 bis 3 zugrunde liegendem Schema werden für besonders vorteilhaft gehalten, da sie nur wenige Bauteile aufweisen und effizient arbeiten. Es gibt jedoch noch weitere Möglichkeiten, wie eine erfindungsgemäße Reifendruckregelanlage bzw. eine erfindungsgemäße Radventilbaugruppe im Detail aufgebaut sein kann. Einige dieser Möglichkeiten sollen hier noch vorgestellt werden.

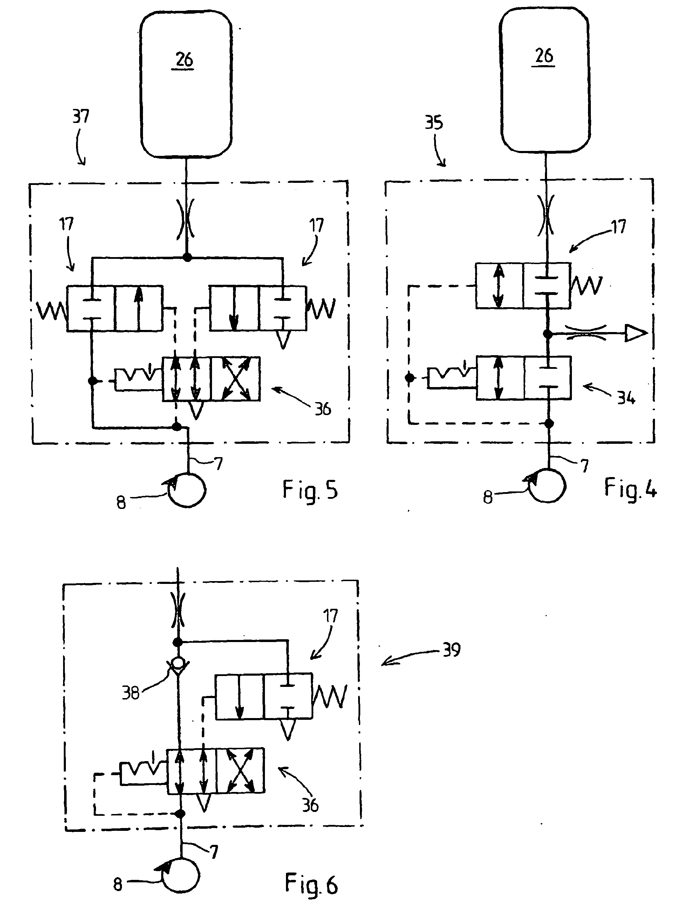

In Fig.4 ist eine erfindungsgemäße Radventilbaugruppe 35 dargestellt, bei der das richtunggebende Ventil 34 zwar als Flip-Flop, ansonsten aber besonders einfach ausgeführt ist. Es ist als 2/2-Wegeventil ausgebildet und verfügt über eine Sperr- und eine Durchlassstellung. In dieser Hinsicht entspricht es also dem Absperrventil 17. Nachteilig bei dieser Radventilbaugruppe ist jedoch, dass sie nicht besonders effizient arbeitet, da bei Reifenfüllvorgängen ein Teil des Druckmittels sinnlos ins Freie entweicht.

Die Radventilbaugruppe 37 aus Fig.5 weist zwei Absperrventile 17 auf, wobei über das eine Füllvorgänge, über das andere Ablassvorgänge erfolgen können. Die Steueranschlüsse der Absperrventile 17 sind mit einem richtunggebenden Ventil 36 verbunden, das zu diesem Zweck als 4/2-Wegeventil ausgebildet ist, wobei die beiden Stellungen jeweils zwei Durchflusswege aufweisen. Bei dieser Variante wird das richtunggebende Ventil 36 weder bei Füll- noch bei Ablassvorgängen vom Füllmittel durchströmt, da es nur in die Steuerleitungen der Absperrventile 17 eingebunden ist. Das im Vergleich zu den Absperrventilen aufgrund der Impulsuntersetzung (Flip-Flop-Eigenschaft) etwas komplizierter aufgebaute richtunggebende Ventil braucht bei dieser Variante nicht für größere Volumenströme ausgelegt zu sein, auch dann nicht, wenn schnelle Reifendruckänderungen vorgesehen sind, worin ein Vorteil gesehen werden kann.

Die Radventilbaugruppe 39 aus Fig.6 weist ebenfalls zwei Absperrventile auf, und zwar ein 2/2-Wegeventil 17 und ein Rückschlagventil 38, wobei über das 2/2-Wegeventil 17 Ablassvorgänge erfolgen können, während Füllvorgänge über das Rückschlagventil 38 erfolgen müssen. Das richtunggebende Ventil 36 wird bei dieser Variante vom abzulassenden Mittel nicht durchströmt, wohl aber vom Druckmittel bei Füllvorgängen.

Alle mit dem Bezugszeichen 17 versehenen Absperrventile sind im Grunde genommen baugleich, lediglich um das Verständnis zu verbessern, weisen die Durchflusswege in den Zeichnungen teilweise zwei und teilweise nur eine Pfeilspitze auf.

Besteht bei Fahrzeugen mit Zwillingsbereifung der Wunsch, diese individuell regeln zu können, so wird man möglicherweise einen erhöhten Aufwand bei den Radventilen gerne in Kauf nehmen, wenn es dadurch gelingt, eine weitere Versorgungsleitung und insbesondere eine zweite Rotorverbindung zu vermeiden.

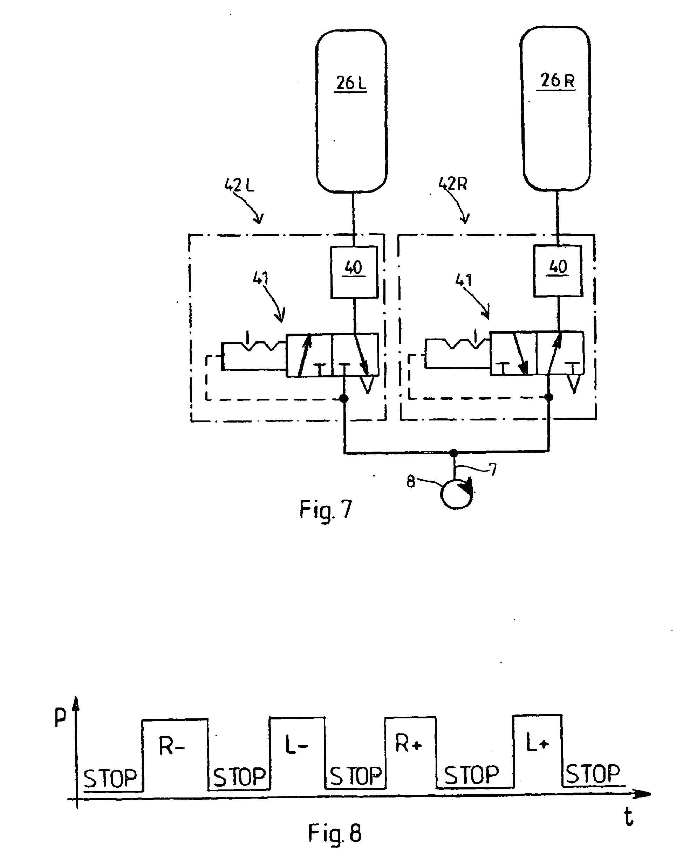

In Fig.7 ist der rotierende Teil einer abreißsicheren Reifendruckregelanlage zur individuellen Regelung der Einzelreifen eines Zwillingspaares über eine gemeinsame Versorgungsleitung und mit gemeinsamer Rotorverbindung schematisch dargestellt. Nachdem die Rotorverbindung 8 durchlaufen wurde, teilt sich die bis dahin gemeinsame Versorgungsleitung 7 in einen linken und in einen rechten Teil, wobei der linke Teil über die Radventilbaugruppe 42L mit dem linken Reifen 26L verbunden ist, während der rechte Teil über die Radventilbaugruppe 42R mit dem rechten Reifen 26R in Verbindung steht. Jedem der Reifen ist also eine eigene Radventilbaugruppe zugeordnet. Jede einzelne dieser Radventilbaugruppen 42L und 42R geht prinzipiell aus einer der bisher vorgestellten Radventilbaugruppen hervor und weist als drittes Charakteristikum neben dem richtunggebenden Ventil (zweites Charakteristikum) ein weiteres, pneumatisch steuerbares und mit Impulsuntersetzung ausgestattetes (also als Flip-Flop ausgebildetes) Ventil auf. Jedes dieser zusätzlichen Ventile ist hier als 3/2-Wegeventil (Umschaltventil 41) ausgebildet und einer Unterbaugruppe 40 vorgeschaltet. Bei den Unterbaugruppen 40 handelt es sich jeweils um eine der Baugruppen 20, 23, 25, 35, 37 oder 39 (dargestellt in den Fig.1 bis 6) oder um eine Kombination davon. Die Radventilbaugruppen 42L und 42R können untereinander baugleich sein, an einem Zwillingsrad verbaut nehmen die beiden dann ebenfalls baugleichen Umschaltventile 41 zu keiner Zeit gleiche Stellungen ein, insofern unterscheiden sie sich doch. Von der Stellung des Umschaltventils 41 hängt jeweils ab, ob an dem betreffenden Reifen während eines in der gemeinsamen Versorgungsleitung 7 auftretenden Hochdruckintervalls eine Druckänderung überhaupt erfolgen kann.

Zur Erläuterung der Funktionsweise der Anlage aus Fig.7 wird angenommen, dass es sich bei den Unterbaugruppen 40 jeweils um eine Radventilbaugruppe 20 (dargestellt in Fig.1) handelt. Die Versorgungsleitung 7 ist zunächst druckentlastet, alle pneumatisch steuerbaren Ventile befinden sich zu Beginn in den Stellungen, wie in Fig.7 und Fig.1 gezeichnet. Außerdem wird angenommen, dass sowohl die Umschaltventile 41 als auch die richtunggebenden Ventile (Umschaltventile 10) negativ schaltend sind (im Gegensatz zur Beschreibung zu Fig.1 weiter oben). Während eines ersten Hochdruckintervalls in der Versorgungsleitung 7 wird dann eine Druckabsenkung an Reifen 26R erfolgen. Wenn dieses Hochdruckintervall endet, der Druck in der Versorgungsleitung 7 also wechselt auf ein signifikant niedriges Niveau, dann werden auch die Umschaltventile 41 jeweils ihre Stellung wechseln. Ebenso wird das richtunggebende Ventil der Radventilbaugruppe 42R (enthalten in der Unterbaugruppe 40) seine Stellung wechseln, nicht jedoch das richtunggebende Ventil der Radventilbaugruppe 42L. Während des darauf folgenden Hochduckintervalls wird also eine Druckabsenkung an Reifen 26L erfolgen. Ein drittes Hochdruckintervall bewirkt eine Druckerhöhung an Reifen 26R, und ein viertes Hochdruckintervall führt zu einer Druckerhöhung an Reifen 26L. Folgt daraufhin ein fünftes Hochdruckintervall, so wird erneut eine Druckabsenkung an Reifen 26R erfolgen und so weiter. Die Abfolge ist in Fig.8 skizziert.

Bei einer Reifendruckregelanlage, wobei die einzelnen Zwillingsreifen jeweils über eine eigene Radventilbaugruppe verfügen, aber über eine gemeinsame Versorgungsleitung individuell geregelt werden (also Konzept wie in Fig.7), können diese Radventilbaugruppen im Detail durchaus unterschiedlich aufgebaut sein. Das zusätzliche, mit Impulsuntersetzung ausgestattete Ventil (drittes Charakteristikum), das diese speziellen Radventilbaugruppen aufweisen, muss nicht unbedingt den Unterbaugruppen 40 vorgeschaltet sein, sondern kann in diese integriert sein, auch an durchaus verschiedenen Stellen, und es kann beispielsweise auch als 2/2-Wegeventil ausgebildet sein. In Fig.7 ist also nur eine von vielen Möglichkeiten stellvertretend dargestellt.

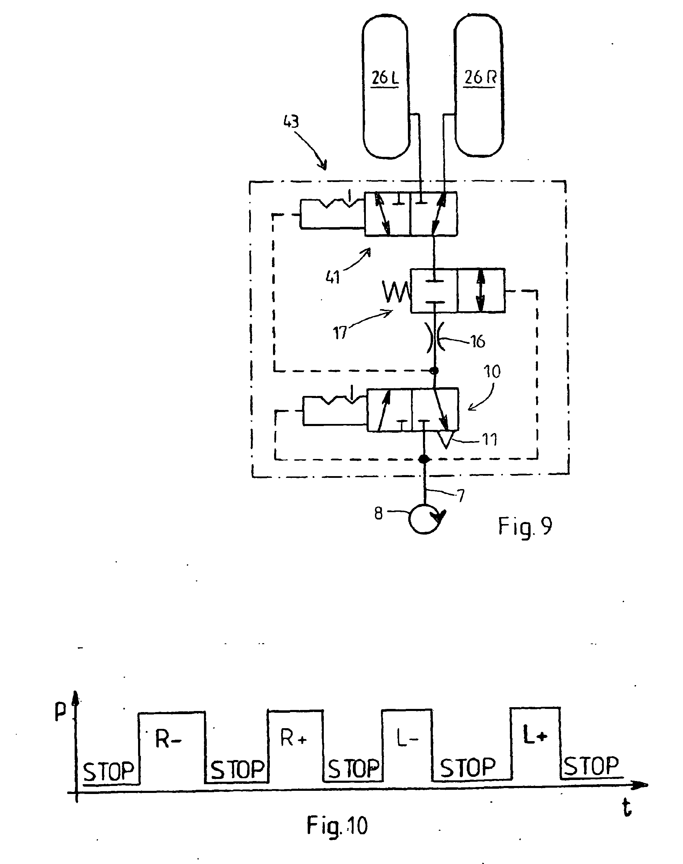

In Fig.9 ist der rotierende Teil einer Reifendruckregelanlage zur individuellen Regelung der Einzelreifen eines Zwillingspaares über eine gemeinsame Versorgungsleitung und mit Hilfe einer gemeinsamen Radventilbaugruppe schematisch dargestellt. Die gemeinsame Radventilbaugruppe 43 umfasst als richtunggebendes Ventil ein Umschaltventil 10 mit Entlüftungsanschluss 11 (zweites Charakteristikum), hier außerdem eine Drosselstelle 16, ein Absperrventil 17 (erstes Charakteristikum) und ein weiteres Umschaltventil 41 (drittes Charakteristikum). Alle Bauteile sind im Prinzip von vorherigen Varianten bekannt und hier nur anders verschaltet. Das Umschaltventil 41 fungiert als Reifenwähler, von seiner Stellung hängt ab, an welchem der Reifen eine Druckänderung erfolgt. Es kann baugleich sein mit dem richtunggebenden Ventil (Umschaltventil 10) und ist im Grunde genommen auch mit den Umschaltventilen 41 aus Fig.7 identisch, auch wenn die Durchflusswege aus Gründen der Lesbarkeit der Zeichnungen das eine Mal zwei, das andere Mal nur eine Pfeilspitze aufweisen.

Zur Erläuterung der Funktionsweise der Anlage aus Fig.9 wird wiederum angenommen, dass sowohl das richtunggebende Ventil 10 als auch das Umschaltventil 41 negativ schaltend sind, dass die Versorgungsleitung 7 zunächst druckentlastet ist und dass sich alle pneumatisch steuerbaren Ventile zu Beginn in den Stellungen befinden, wie in Fig.9 gezeichnet. Während eines ersten Hochdruckintervalls in Versorgungsleitung 7 wird dann eine Druckabsenkung an Reifen 26R erfolgen. Ein darauf folgendes Hochduckintervall bewirkt eine Druckerhöhung am gleichen Reifen 26R. Ein drittes Hochdruckintervall führt zu einer Druckabsenkung an Reifen 26L, während das vierte Hochdruckintervall eine Druckerhöhung an Reifen 26L bewirkt. Folgt daraufhin ein fünftes Hochdruckintervall, so wird wieder eine Druckabsenkung an Reifen 26R erfolgen und so weiter. Diese Abfolge ist in Fig.10 skizziert, sie unterscheidet sich von der Abfolge nach Fig.8. Wenn diese Folge (Fig. 10) komplett abgelaufen ist, dann hat das Absperrventil 17 achtmal seine Stellung gewechselt, das richtunggebende Ventil 10 hat seine Stellung viermal gewechselt, das Umschaltventil 41 nur zweimal.

Auf den Aufbau der mit lmpulsuntersetzung ausgestatteten, pneumatisch steuerbaren Ventile wird hier nicht näher eingegangen. Derartige Ventile sind prinzipiell bekannt bzw. mit heutiger Technik realisierbar. Sie können so ausgebildet sein, dass sie die für einen Stellungswechsel benötigte Schaltenergie über ihre Steuereingänge vom Druckmittel beziehen. Sollten mit Impulsuntersetzung ausgestattete, pneumatisch steuerbare Ventile mit der Eigenschaft "negativ schaltend" nicht zur Verfügung stehen, wohl aber solche mit der Eigenschaft "positiv schaltend", so kann man sich behelfen, indem man auf die positiv schaltenden Ventile zurückgreift und den Steuereingängen jeweils einen Druckinverter vorschaltet.

## Patentansprüche

1. Verfahren zur Reifendruckregelung, wobei Reifen (26, 26L, 26R) über Radventile (20, 23. 25, 35, 37, 39, 42L, 42R, 43) und Rotorverbindungen (8) an Versorgungsleitungen (7) angeschlossen sind, wobei vom stationären Teil der Regelanlage das Druckniveau in den Versorgungsleitungen (7) bestimmt wird, indem zwischen einem signifikant niedrigen und einem signifikant hohen Druck gewechselt wird, so dass sich Hochdruckintervalle mit Niedrigdruckintervallen abwechseln, mit folgenden Merkmalen:
1. eine Reifendruckänderung erfolgt nur dann, wenn in der entsprechenden Versorgungsleitung ein Hochdruck herrscht und eine Wartezeit abgelaufen ist, wobei die Wartezeit auch entfallen kann,
2. eine Reifendruckänderung erfolgt während eines in der Versorgungsleitung (7) auftretenden Hochdruckintervalls nur in eine Richtung und im Falle einer individuellen Regelung von Zwillingsreifen (26L, 26R) über eine gemeinsame Versorgungsleitung (7) nur an einem der beiden Reifen,
3. bei Reifen (26), denen eine eigene Versorgungsleitung (7) zugeordnet ist, ändert sich von Hochdruckintervall zu Hochdruckintervall die Richtung, in die eine Reifendruckänderung erfolgt oder nach Ablauf der Wartezeit erfolgen würde.
4. bei Zwillingsreifen (26L, 26R), die über eine gemeinsame Versorgungsleitung (7) individuell geregelt werden, ändert sich von Hochdruckintervall zu Hochdruckintervall die Richtung, in die eine Reifendruckänderung erfolgt oder nach Ablauf der Wartezeit erfolgen würde, und/oder es wechselt der Reifen, bei dem die Druckänderung erfolgt oder nach Ablauf der Wartezeit erfolgen würde, so dass vier direkt aufeinander folgende Hochdruckintervalle an jedem der beiden Reifen eine Druckänderung in jede der beiden Richtungen bewirken oder nach Ablauf der Wartezeit bewirken würden.

2. Verfahren nach Anspruch 1, **dadurch gekennzeichnet, dass** die signifikant niedrigen Drücke mit dem Umgebungsdruck übereinstimmen.

3. Verfahren nach Anspruch 1 oder 2, **dadurch gekennzeichnet, dass** die Reifenfülldrücke mit Hilfe eines Telemetriesystems an ein zentrales Steuergerät (33) übermittelt werden und mit Zielvorgaben, welche fest hinterlegt oder in Grenzen frei wählbar sein können, verglichen werden, wobei das zentrale Steuergerät (33) in Abhängigkeit vom Ergebnis des Vergleichs automatisch Reifendruckänderungsvorgänge einleitet und abschließt.

4. Reifendrurckregelanlage mit zentraler Druckquelle, wobei Reifen (26, 26L, 26R) über Radventile (20, 23, 25, 35, 37, 39, 42L, 42R, 43) und Rotorverbindungen (8) an Versorgungsleitungen (7) angeschlossen sind, wobei vom stationären Teil der Regelanlage das Druckniveau in den versorgungsleitungen vorgebbar ist und wobei die Radventile dazu ausgebildet sind. Füllvorgänge und Ablassvorgänge ausschließlich aufgrund einer Unterscheidung zwischen einem signifikant niedrigen und einem signifikant hohen Druck auszuführen, **dadurch gekennzeichnet, dass** jedes Radventil eine Kombination unterschiedlicher Ventile umfasst, die eine Radventilbaugruppe bilden, wobei eine Radventilbaugruppe (20, 23, 25, 35, 37, 39, 42L, 42R, 43) mindestens folgende Ventiltypen umfasst
1. mindestens ein Absperrventil (17, 38), das sicherstellt, dass bei niedrigem Druck in der Versorgungsleitung (7) keine Reifendruckänderung erfolgt,
2. ein richtunggebendes Ventil (10, 34, 36), das pneumatisch steuerbar und als pneumatisches Flip-Flop ausgebildet ist und von dessen Stellung abhängt, ob eine erfolgende Relfendruckänderung als Füllvorgang oder aber als Ablassvorgang stattfindet.

5. Anlage nach Anspruch 4, **dadurch gekennzeichnet, dass** sich zwischen den Versorgungsleitungen (7) und den Reifen (26, 26L, 26R) Drosselstellen (16) befinden, die auch in die Radventilbaugruppen integriert sein können.

6. Anlage nach Anspruch 5, **dadurch gekennzeichnet, dass** die Radvenblbaugruppe (23, 25, 35) eine Drosselstelle (21) extra aufweist.

7. Anlage nach einem der Ansprüche 4 bis 6, **dadurch gekennzeichnet, dass** die Radventilbaugruppe ein Drueksicherungsventil umfasst, das einen charakteristischen Öffnungsdruck aufweist, wobei der charakteristische Öffnungsdruck eine untere Schranke für Ablassvorgänge darstellt

8. Anlage nach Anspruch 7, **dadurch gekennzeichnet, dass** das Drucksicherungsventil als federbelastetes Rückschlagventil (22) ausgebildet ist.

9. Anlage nach einem der Ansprüche 4 bis 8, **dadurch gekennzeichnet, dass** die Radventilbaugruppe (25) ein Verzögerungsglied (24) aufweist, das dem pneumatischen Steueranschluss (18) eines Absperrventils (17) vorgeschaltet und so gestaltet ist, dass ein niedriger Druck in der Steuerleitung (19) sogleich auch am Steueranschluss (18) anliegt, dass aber nach einem Wechsel auf ein hohes Druckniveau immer eine Wartezeit vergeht, bis das neue Druckniveau in signifikanter Höhe am Steueranschluss (18) anliegt.

10. Anlage nach einem der Ansprüche 4 bis 9, **dadurch gekennzeichnet, dass** sie eine Anzeigevorrichtung (45) aufweist, die von einem Strömungssensor (44) angesteuert wird und die dem Benutzer signalisiert, ob gerade ein Füllvorgang stattfindet.

11. Anlage nach einem der Ansprüche 4 bis 9, **dadurch gekennzeichnet, dass** sie eine Anzeigevorrichtung (29) aufweist, die dem Benutzer signalisiert, ob gerade ein Füllvorgang oder aber ein Ablassvorgang stattfindet, wobei die Anzeigevorrichtung (29) einen pneumatisch steuerbaren Umschaltkontakt (27) aufweist, der als pneumatisches Flip-Flop ausgebildet ist und dessen Steuerleitung (28) an die Versorgungsleitung (7) angeschlossen ist.

12. Anlage nach einem der Ansprüche 4 bis 10, **dadurch gekennzeichnet, dass** Zwillingsreifen über eine gemeinsame Versorgungsleitung (7) individuell regelbar sind, indem jedem Einzelnen der beiden Reifen (26L, 26R) eine eigene Radventilbaugruppe (42L bzw. 42R) zugeordnet ist, welche jeweils ein als pneumatisches Flip-Flop ausgebildetes, pneumatisch steuerbares Ventil (41) extra aufweist, von dessen Stellung jeweils abhängt, ob bei dem zugehörigen Reifen (26L bzw. 26R) während eines in der gemeinsamen Versorgungsleitung (7) auftretenden Hochdruckintervalls eine Druckänderung erfolgt.

13. Anlage nach einem der Ansprüche 4 bis 10, **dadurch gekennzeichnet, dass** Zwillingsreifen über eine gemeinsame Versorgungsleitung (7) individuell regelbar sind, indem ihnen eine gemeinsame Radventilbaugruppe (43) zugeordnet ist, welche ein als pneumatisches Flip-Flop ausgebildetes, pneumatisch steuerbares Ventil (41) extra aufweist, von dessen Stellung abhängt, bei welchem der Zwidingsreffen (26L oder 26R) während eines in der gemeinsamen Versorgungsleitung (7) auftretenden Hochdruckcintervalls eine Druckänderung erfolgt.

14. Anlage nach einem der Ansprüche 4 bis 10, **dadurch gekennzeichnet, dass** ein für die Reifendruckkontrolle vorgesehenes und entsprechend erweitertes Telemetrissystem vorgesehen ist, mittels welchem die Stellung des richtunggebenden Ventils (10, 34, 36) an ein zentrales Steuergerät (33) und/oder ein spezielles Anzeigegerät übertragbar ist.

15. Anlage nach Anspruch 14, **dadurch gekennzeichnet, dass** die Radventilbaugruppe und der dazugehörige Drucksensor mit Sendemodul zu einer Baueinheit zusammengeführt sind.

## Claims

1. Method for tyre pressure control, whereby tyres (26, 26L, 26R) are connected via wheel valves (20, 23, 25, 35, 37, 39, 42L, 42R, 43) and rotor connections (8) to supply lines (7), wherein the pressure level in the supply lines (7) is determined by the stationary portion of the control system in that there is change between a significantly low and a significantly high pressure such that high pressure intervals alternate with low pressure intervals, having the following features:
1. a tyre pressure change only takes place if high pressure prevails in the corresponding supply line and a waiting time has expired, whereby the waiting time can also be omitted,
2. a tyre pressure change only takes place in one direction during a high pressure interval which occurs in the supply line (7) and, in the case of individual control of twin tyres (26L, 26R) via a common supply line (7), in only one of the two tyres,
3. with tyres (26) to which a dedicated supply line (7) is assigned, the direction in which a tyre pressure change takes place or would take place after expiry of the waiting time changes from high pressure interval to high pressure interval,
4. with twin tyres (26L, 26R), which are individually controlled via a common supply line (7), the direction in which a tyre pressure change takes place or would take place after expiry of the waiting time changes from high pressure interval to high pressure interval, and/or the tyre in which the pressure change takes place or would take place after expiry of the waiting time changes such that four directly consecutive high pressure intervals in each of the two tyres bring about a pressure change in each of the two directions or would bring about a pressure change after expiry of the waiting time.

2. Method according to claim 1, **characterised in that** the significantly lower pressures coincide with the ambient pressure.

3. Method according to claim 1 or 2 **characterised in that** the tyre inflation pressures are transmitted to a central control unit (33) by means of a telemetry system and are compared with target values which are permanently stored or can be freely selectable within limits, wherein the central control unit (33) automatically initiates and completes tyre pressure changing processes depending on the result of the comparison.

4. Tyre pressure control system with central pressure source, whereby tyres (26, 26L, 26R) are connected via wheel valves (20, 23, 25, 35, 37, 39, 42L, 42R, 43) and rotor connections (8) to supply lines (7), wherein the pressure level in the supply lines is specifiable by the stationary portion of the control system and whereby the wheel valves are designed to carry out inflation and venting processes based exclusively on a differentiation between a significantly low and a significantly high pressure, **characterised in that** every wheel valve includes a combination of different valves which form a wheel valve assembly wherein a wheel valve assembly (20, 23, 25, 35, 37, 39, 42L, 42R, 43) includes at least the following valve types:
1. at least one shut-off valve (17, 38) which ensures that no pressure change takes place in the tyre when there is low pressure in the supply line (7),
2. a directional valve (10, 34, 36) which is pneumatically controllable and is designed as a pneumatic flip-flop and the position of which determines whether a tyre pressure change taking place is performed as an inflation process or as a venting process.

5. System according to claim 4, **characterised in that** throttling points (16), which may also be integrated in the wheel valve assemblies, are located between the supply lines (7) and the tyres (26, 26L, 26R).

6. System according to claim 5, **characterised in that** the wheel valve assembly (23, 25, 35) additionally has a throttling point (21).

7. System according to one of claims 4 to 6, **characterised in that** the wheel valve assembly includes a pressure relief valve which has a characteristic opening pressure, whereby the characteristic opening pressure represents a lower limit for venting processes.

8. System according to claim 7, **characterised in that** the pressure relief valve is designed as a spring-loaded non-return valve (22).

9. System according to one of claims 4 to 8, **characterised in that** the wheel valve assembly (25) has a delay element (24) which is connected upstream of the pneumatic control connection (18) of a shut-off valve (17) and is designed such that a low pressure in the control line (19) is also immediately present at the control connection (18) and that after a change to a high pressure level, however, a waiting time always passes until the new pressure level present at the control connection (18) is significantly high.

10. System according to one of claims 4 to 9, **characterised in that** it has an indicator device (45) which is activated by a flow sensor (44) and which signals to the user whether an inflation process is currently taking place.

11. System according to one of claims 4 to 9, **characterised in that** it has an indicator device (29) which signals to the user whether an inflation process or a venting process is currently taking place, wherein the indicator device (29) has a pneumatically controllable change-over contact (27) which is designed as a pneumatic flip-flop and the control line (28) of which is connected to the supply line (7).

12. System according to one of claims 4 to 10, **characterised in that** twin tyres can be individually controlled via a common supply line (7) **in that** each individual of the two tyres (26L, 26R) is assigned its own wheel valve assembly (42L and 42R respectively), which in each case additionally has a pneumatically controllable valve (41) designed as a pneumatic flip-flop, the position of which determines in each case whether a pressure change takes place in the associated tyre (26L and 26R respectively) during a high pressure interval occurring in the common supply line (7).

13. System according to one of claims 4 to 10, **characterised in that** twin tyres can be individually controlled via a common supply line (7) **in that** they are assigned a common wheel valve assembly (43), which additionally has a pneumatically controllable valve (41) designed as a pneumatic flip-flop, the position of which determines in which of the twin tyres (26L or 26R) a pressure change takes place during a high pressure interval occurring in the common supply line (7).

14. System according to one of claims 4 to 10, **characterised in that** a telemetry system, which is provided for tyre pressure checking and is extended accordingly, is provided by which means the position of the directional valve (10, 34, 36) can be transmitted to a central control unit (33) and/or a special indicator unit.

15. System according to claim 14, **characterised in that** the wheel valve assembly and the associated pressure sensor with transmitter module are brought together in one unit.

## Revendications

1. Procédé de réglage de pression de pneus, dans lequel des pneus (26, 26L, 26R) sont reliés par le biais de valves de roue (20, 23, 25, 35, 37, 39, 42L, 42R, 43) et de raccords tournants (8) à des lignes d'alimentation (7), et la partie stationnaire du système de réglage détermine le niveau de pression dans les lignes d'alimentation (7) en basculant entre une pression significativement basse et une pression significativement élevée de façon que des intervalles à haute pression alternent avec des intervalles à basse pression, ledit procédé présentant les caractéristiques suivantes :
1. Une modification de la pression des pneus a lieu uniquement lorsqu'une pression élevée règne dans la ligne d'alimentation correspondante et qu'un temps d'attente est écoulé, ledit temps d'attente pouvant aussi être nul ;
2. Une modification de la pression des pneus a lieu pendant l'apparition d'un intervalle à haute pression dans la ligne d'alimentation (7) dans une seule direction et, dans le cas d'un réglage individuel de pneus jumelés (26L, 26R) par le biais d'une ligne d'alimentation (7) commune, pour un seul des deux pneus ;
3. Dans le cas de pneus (26) associés à une ligne d'alimentation (7) qui leur est propre, la direction dans laquelle une modification de la pression des pneus a lieu ou aurait lieu une fois le temps d'attente écoulé change d'un intervalle à haute pression à l'autre ;
4. Dans le cas de pneus jumelés (26L, 26R) qui sont réglés individuellement par le biais d'une ligne d'alimentation (7) commune, la direction dans laquelle une modification de la pression des pneus a lieu ou aurait lieu une fois le temps d'attente écoulé change d'un intervalle à haute pression à l'autre et/ou le pneu pour lequel la modification de pression a lieu ou aurait lieu une fois le temps d'attente écoulé change de telle façon que quatre intervalles à haute pression directement consécutifs entraînent, ou entraîneraient une fois le temps d'attente écoulé, une modification de pression sur chacun des deux pneus.

2. Procédé selon la revendication 1, **caractérisé en ce que** les pressions significativement basses correspondent à la pression ambiante.

3. Procédé selon la revendication 1 ou la revendication 2, **caractérisé en ce que** la pression de gonflage des pneus est transmise au moyen d'un système de télémétrie à une unité de commande centrale (33) et comparée à des valeurs de consigne, qui peuvent être définies de manière fixe ou sélectionnées librement entre des limites, et ladite unité de commande centrale (33) déclenche et stoppe automatiquement des processus de modification de la pression des pneus en fonction du résultat de cette comparaison.

4. Installation de réglage de pression de pneus avec une source de pression centrale, dans laquelle des pneus (26, 26L, 26R) sont reliés par le biais de valves de roue (20, 23, 25, 35, 37, 39, 42L, 42R, 43) et de raccords tournants (8) à des lignes d'alimentation (7), la partie stationnaire du système de réglage permettant de prédéfinir le niveau de pression dans les lignes d'alimentation et les valves de roue étant configurées de manière à effectuer des processus de gonflage et dégonflage exclusivement sur la base d'une différenciation entre une pression significativement basse et une pression significativement élevée, **caractérisée en ce que** chaque valve de roue comprend une combinaison de différentes valves formant un ensemble de valves de roue, un ensemble de valves de roue (20, 23, 25, 35, 37, 39, 42L, 42R, 43) comprenant au moins les types de valves suivants :
1. Au moins une valve d'arrêt (17, 38) garantissant qu'il ne se produit aucune modification de la pression des pneus lorsque la pression est basse dans la ligne d'alimentation (7) ;
2. Une valve de détermination de direction (10, 34, 36) à commande pneumatique, réalisée sous la forme d'une bascule bistable pneumatique, dont la position détermine si une modification de la pression des pneus s'effectue sous la forme d'un processus de gonflage ou d'un processus de dégonflage.

5. Installation selon la revendication 4, **caractérisée en ce qu'**il est prévu entre les lignes d'alimentation (7) et les pneus (26, 26L, 26R) des points d'étranglement (16), qui peuvent également être intégrés dans les ensembles de valves de roue.

6. Installation selon la revendication 5, **caractérisée en ce que** l'ensemble de valves de roue (23, 25, 35) présente un point d'étranglement supplémentaire (21).

7. Installation selon l'une des revendications 4 à 6, **caractérisée en ce que** l'ensemble de valves de roue comprend une valve de sécurité de pression qui présente une pression d'ouverture caractéristique, laquelle pression d'ouverture caractéristique constitue une limite inférieure pour les processus de dégonflage.

8. Installation selon la revendication 7, **caractérisée en ce que** la valve de sécurité de pression est réalisée sous la forme d'un clapet antiretour chargé par ressort (22).

9. Installation selon l'une des revendications 4 à 8, **caractérisée en ce que** l'ensemble de valves de roue (25) présente un élément retardateur (24) disposé en amont du raccord de commande pneumatique (18) d'une valve d'arrêt (17) et configuré de telle façon qu'une basse pression dans la ligne de commande (19) est également présente immédiatement sur le raccord de commande (18) mais que, après un passage à un niveau de pression élevée, il s'écoule toujours un temps d'attente jusqu'à ce que le nouveau niveau de pression soit présent à un degré significatif sur le raccord de commande (18).

10. Installation selon l'une des revendications 4 à 9, **caractérisée en ce qu'**elle présente un dispositif indicateur (45), commandé par un capteur de débit (44), qui signale à l'utilisateur si c'est une opération de gonflage qui est en cours.

11. Installation selon l'une des revendications 4 à 9, **caractérisée en ce qu'**elle présente un dispositif indicateur (29) qui signale à l'utilisateur si c'est une opération de gonflage ou bien une opération de dégonflage qui est en cours, le dispositif indicateur (29) présentant un contact inverseur à commande pneumatique (27) qui est réalisé sous la forme d'une bascule bistable pneumatique et dont la ligne de commande (28) est reliée à la ligne d'alimentation (7).

12. Installation selon l'une des revendications 4 à 10, **caractérisée en ce que** des pneus jumelés peuvent être réglés individuellement par le biais d'une ligne d'alimentation (7) commune en affectant à chacun des deux pneus (26L, 26R) un ensemble de valves de roue (42L ou 42R) qui leur est propre et qui présente respectivement une valve à commande pneumatique (41) supplémentaire, réalisée sous la forme d'une bascule bistable pneumatique, dont la position détermine si une modification de pression a lieu sur le pneu concerné (26L ou 26R) pendant qu'un intervalle à haute pression est présent dans la ligne d'alimentation (7) commune.

13. Installation selon l'une des revendications 4 à 10, **caractérisée en ce que** des pneus jumelés peuvent être réglés individuellement par le biais d'une ligne d'alimentation (7) commune en leur affectant un ensemble de valves de roue (43) commun qui présente une valve à commande pneumatique (41) supplémentaire, réalisée sous la forme d'une bascule bistable pneumatique, dont la position détermine sur lequel des pneus jumelés (26L ou 26R) une modification de pression a lieu pendant qu'un intervalle à haute pression est présent dans la ligne d'alimentation (7) commune.

14. Installation selon l'une des revendications 4 à 10, **caractérisée en ce qu'**il est prévu un système de télémétrie servant à contrôler la pression des pneus et étendu en conséquence au moyen duquel la position de la valve de détermination de position (10, 34, 36) peut être transmise à une unité de commande centrale (33) et/ou à un dispositif indicateur spécial.

15. Installation selon la revendication 14, **caractérisée en ce que** l'ensemble de valves de roue et le capteur de pression associé sont regroupés dans un bloc avec un module émetteur.
